# EUROPÄISCHE PATENTSCHRIFT

(11) **EP 3 096 935 B1**
(45) Veröffentlichungstag und Bekanntmachung des Hinweises auf die Patenterteilung: **28.10.2020**
(21) Anmeldenummer: 15700295.7
(22) Anmeldetag: 13.01.2015
(51) Int. Cl.: B29C 65/08, B29C 65/56, B29C 65/48

(54) **VERFAHREN ZUM FÜGEN VON FASERVERSTÄRKTEM KUNSTSTOFFMATERIAL**
METHOD FOR JOINING FIBRE-REINFORCED PLASTIC MATERIAL
PROCÉDÉ D'ASSEMBLAGE DE MATIÈRE PLASTIQUE RENFORCÉE PAR DES FIBRES

(30) Priorität: 24.01.2014 DE 102014201296
(43) Veröffentlichungstag der Anmeldung: 30.11.2016
(73) Patentinhaber: Bayerische Motoren Werke Aktiengesellschaft, 80809 München (DE)
(72) Erfinder: EROGLU, Oguzhan, 88400 Biberach (DE); STEFANZIOSA, Clemens, 80539 München (DE)
(86) Internationale Anmeldenummer: PCT/EP2015/050468
(87) Internationale Veröffentlichungsnummer: WO 2015/110311

(56) Entgegenhaltungen:
- US-A- 3 765 973
- US-A- 4 326 902
- US-A1- 2013 149 501
- HARRASB ET AL: "Optimization of the Ultrasonic Welding of PEEK-Carbon Composites", JOURNAL OF REINFORCED PLASTICS AND COMPOSITES, TECHNOMIC PUBLISHING, US, Bd. 15, 1. Februar 1996 (1996-02-01), Seiten 174-182, XP007901651, ISSN: 0731-6844

## Beschreibung

Die vorliegende Erfindung betrifft ein Verfahren zum Fügen von faserverstärkten Kunststoffmaterialien. Die vorliegende Erfindung betrifft daher ein Verfahren zum Fügen, insbesondere zum Verschweißen von faserverstärkten, aus einem Kunststoffmaterial gebildeten Fügepartnern an ihren Verbindungsflächen mittels eines Ultraschallschweißverfahrens, wobei in die Fügestelle zur Erhöhung der Festigkeit der Verbindung ein Konzentrator und/oder ein Einleger eingebettet wird.

Aufgrund der kontinuierlichen Entwicklung von Kunststoffmaterialien und durch die saubere und einfache Handhabung dieser Materialien hat sich das Verbinden von thermoplastischen Werkstoffen mittels Ultraschallschweißen rasch etabliert. Die mittels Ultraschallschweißen hergestellte "unlösbare" Verbindung lässt sich auf unterschiedlichste technische Gebiete und Kunststoffe anwenden.

Beim Ultraschallschweißen werden durch Grenzflächen reibung und Schallabsorption die eingeleiteten Schwingungen bei gleichzeitig aufgebrachter Kraft in Schmelzwärme umgewandelt. Das Fügematerial fließt innerhalb der Schweißzone der beiden Fügeteile ineinander und bildet nach dem Erkalten eine annähernd homogene Verbindung. Die Nahtfestigkeit kann insbesondere über die Profilierung der Amplitude und/oder der Kraft beeinflusst werden.

Dem Stand der Technik sind diverse Vorrichtung und Verfahren zum Schweißen mit Ultraschall bekannt. So ist aus der DE 1804988 B eine Vorrichtung zum Ultraschallschweißen von thermoplastischem Material bekannt, wobei eine Sonotrode mit langgestrecktem Scheitel und eine Gegenfläche gegeneinander gepresst und relativ zueinander angeordnet sind, wobei die Vorrichtung bei verschiedenen Materialformen, wie Plattenmaterial verschiedener Dicke und mit selbst relativ großen Abmessungen Anwendung finden kann. Mit einer solchen Vorrichtung können insbesondere auch Gewebe, die aus thermoplastischen Fasern hergestellt sind oder wenigstens thermoplastische Fasern in Verbindung mit Naturfasern enthalten, bspw. eine Mischung aus Polyesterfaser oder Baumwolle, miteinander verbunden werden.

Aus der DE 10 2010 038 470 ist ein weiteres Verfahren zum Herstellen einer stoffschlüssigen Verbindung zwischen Werkstücken mit den Schritten bekannt: Bereitstellen eines Werkstücks mit einer Metalloberfläche, das mindestens an einer Schmelzfläche eine Beschichtung aufweist, die einen Thermoplasten enthält, Bereitstellen eines Werkstücks mit einer thermoplastischen Oberfläche, Aneinanderlegen von Schmelzfläche und Werkstück mit thermoplastischer Oberfläche, Verschweißen des Werkstücks mit einer Metalloberfläche und des Werkstücks mit thermoplastischer Oberfläche an der Schmelzfläche durch Einwirken von Ultraschall.

Aus der DE 2944080 A ist eine Ultraschallvorrichtung zum Schweißen von Metallfolien, insbesondere Aluminiumfolien, die mit Kunststoff beschichtet sind, bekannt, welche eine mittels eines Emitters und eines Verstärkers, wie sie in herkömmlichen Ultraschallschweißgeräten üblich sind, erregten Sonotrode und die einen Auflageblock aufweist, auf welchem die zu verschweißenden Folien aufgelegt werden.

Weiter ist aus der DE 602004002051 T2 ein Verfahren zum Verschweißen von thermoplastischen Materialien mittels Ultraschall bekannt, wobei eine dünne thermoplastische Schicht mindestens ein Loch aufweist und wobei das Verschweißen ausschließlich im Bereich des Loches erfolgt.

Aus der AT 0334616 B ist ein Verfahren zum dichten Verbinden eines Behälters aus thermoplastischem Kunststoff mittels Ultraschall bekannt, wobei die Materialien in einem Überlapp zur Herstellung von flüssigkeitsdichten Hüllen verschweißt werden.

Aus den Druckschriften US 4 326 902 A und US 3 765 973 A sind weitere Verfahren bekannt, um Kunststoffe miteinander zu verbinden. Aus der Publikation von Harrasb et al: "Optimization of the ultrasonic welding of PEEK-carbon composites", Journal of Reinforced Plastic and composites, Technomic Publishing, US Bd. 15, 1.02.1996, Seiten 175-182, XP007901651, ISSN 0731-6844 ist ein optimiertes Verfahren bekannt, um insbesondere komplexe und große Bauteilstrukturen aus Kunststoff miteinander im Ultraschallverfahren zu verbinden.

Aus der US 2013/149501 A1 ist ein Verfahren bekannt, um aus Faserverbundmaterialien Faserverbundstrukturen herzustellen.

Die im Stand der Technik bekannten Verfahren weisen jedoch verschiedene Nachteile auf. Zum einen bestehen Probleme darin, dass beim Verschweißen von Kunststoffen mit unterschiedlichen Schmelzpunkten ein unbefriedigender Schweißvorgang erzielt wird.

Ein ganz wesentlicher Aspekt beim Verschweißen von Kunststoffen besteht in der Festigkeit der Verbindungsstelle. Insbesondere bei Verwendung von faserverstärkten Kunststoffen besteht ein Bedürfnis darin, dass die Schweißstelle bzw. Fügestelle ausreichend hohe Festigkeit und Stabilität aufweist.

Es ist allerdings beim Verschweißen von faserverstärktem Kunststoff bekannt, dass beim Aufweichen und Erhitzen der Kunststoffe die in dem faserverstärkten Kunststoff befindlichen Endlosfasern an den Grenzflächen nicht in die Fügestelle hinein ragen und folglich nicht zur Festigkeit der Verbindung beitragen. Somit sind trotz Verwendung der Faserverbundwerkstoffe die Festigkeitseigenschaften an der Verbindungsstelle deutlich niedriger, als im Vergleich zu der Festigkeit des Faserverbundwerkstoffes.

Dies bedeutet, dass die Verbindungsstelle als solche ohne Partikelverstärkung oder Faserverstärkung vorliegt.

Es ist daher Aufgabe der vorliegenden Erfindung, vorbesagte Nachteile zu überwinden und ein verbessertes Verfahren zum Fügen bzw. zum Verschweißen von faserverstärkten, aus einem Kunststoffmaterial gebildeten Fügepartnern bereit zu stellen, bei dem die Fügestelle eine verbesserte Festigkeit aufweist.

Diese Aufgabe wird gelöst mit einem Verfahren mit den Merkmalen von Anspruch 1 oder Anspruch 2.

Der Grundgedanke der vorliegenden Erfindung liegt darin, in die Fügestelle der faserverstärkten, aus einem Kunststoffmaterial gebildeten Fügepartnern einen gesonderten Konzentrator und/oder einen Einleger einzubetten, um ein form- und oder materialschlüssige Verbindungsstelle zu schaffen.

Ein erster Aspekt der Erfindung besteht darin einen Konzentrator z.B. in Form eines Granulates in die Fügestelle einzubetten, um einen bestimmungsgemäß ausgebildeten Mischbereich aufgrund des Aufschmelzens des Granulates zu erzeugen.

Ein zweiter Aspekt der Erfindung besteht darin, statt des Konzentrators einen Einleger mit einer höheren Schmelztemperatur als die der Fügepartner zu verwenden, so dass der Einleger beim Aufschmelzen der Verbindungsflächen in diese mit Formschluss eingebettet wird.

Erfindungsgemäß wird daher ein Verfahren zum Fügen von faserverstärkten, aus einem Kunststoffmaterial gebildeten Fügepartner an ihren Verbindungsflächen vorgeschlagen, wobei ein Konzentrator im Bereich der Verbindungsflächen zwischen diese aufgebracht und gemeinsam mit den Verbindungsflächen mittels eines Ultraschallschweißverfahren aufgeschmolzen wird, derart, dass sich eine materialschlüssige Fügestelle als ein Mischbereich aus den Materialen der Fügepartner und des Konzentrators nach dem Aushärten ausbildet.

Alternativ wird ferner ein Verfahren zum Fügen von faserverstärkten, aus einem Kunststoffmaterial gebildeten Fügepartner an ihren Verbindungsflächen vorgeschlagen, wobei ein Einleger im Bereich der Verbindungsflächen zwischen diese aufgebracht wird und die Verbindungsflächen mittels eines Ultraschallschweißverfahren aufgeschmolzen werden, derart, dass der Einleger formschlüssig in die Verbindungsflächen eingebettet und so eine formschlüssige Fügestelle erhalten wird. Bevorzugt geschieht dies dadurch, dass die Schmelztemperatur des Einlegers oberhalb der Schmelztemperatur der Fügepartner liegt. Dadurch schmelzen die Verbindungsflächen der Fügepartner auf und kann der Einleger kann in diese formschlüssig eingebettet werden.

Somit kann einerseits vor dem eigentlichen Schweißprozess ein zusätzliches thermoplastisches Material in Form eines Konzentrators und/oder eines Einlegers an der Stelle zwischen den Fügepartnern aufgebracht werden, wo dieser bestimmungsgemäß zur Erhöhung der Festigkeit benötigt wird. Erfindungsgemäß sind dabei sowohl die Lage, die Menge und die Materialbeschaffenheit des Konzentrators oder Einlegers abhängig von der Fügeaufgabe flexibel auf den Prozess anpassbar.

Mögliche Konzentrator-Matrixmaterialen sollen einen ähnlichen Schmelzbereich und damit eine ähnliche Schmelztemperatur wie die Fügepartner aufweisen, damit eine ausreichend stabile Verbindung hergestellt werden kann. Bevorzugt werden zwei gleichartige Kunststoffe miteinander verschweißt, es kann aber bspw. auch ein faserverstärktes Kunststoffbauteil aus einem PA6 mit einem Konzentrator aus einem PA6.6 oder PA12 gefügt werden.

Erfindungsgemäß werden ein Ultraschallwandler und eine Sonotrode derart angeordnet, um die beiden Fügepartner durch mechanische Schwingungen an ihren Verbindungsflächen aufzuschmelzen und eine Schweißverbindung herzustellen.

Es ist weiter bevorzugt, wenn die Fügepartner aus einem thermoplastischen Kunststoff bestehen, in die eine Vielzahl von Endlosfasern eingebettet sind. Auf diese Weise können endlosfaserverstärkte thermoplastische Kunststoffe durch Auswahl mit geeigneten Konzentratoren so verbunden werden, dass hochfeste Fügestellen erhalten werden.

Es ist daher besonders bevorzugt, wenn der verwendete Konzentrator ein faserverstärktes oder partikelverstärktes Kunststoffmaterial aufweisen. Auf diese Weise kann sichergestellt werden, dass beim Aufschmelzen des Konzentrators auch eine Faserverstärkung in den Grenzflächen und damit in der Fügestelle erzielt werden kann. Als Verstärkungsfaser oder Verstärkungspartikel können bevorzugt Carbonfasern, Kohlestofffasern oder Glasfasern bzw. Carbonpartikel, Kohlestoffpartikel oder Glasfaserpartikel oder dergleichen verwendet werden.

In einer weiter bevorzugten Ausführungsform der Erfindung ist es vorgesehen, dass ein oder mehrere Einleger in einer entsprechend angepassten Form, Größe und/oder einer ausgewählten Materialzusammensetzung in die Fügestelle eingebettet werden. Auf diese Weise können auch komplexe Fügeprozesse durch geeignete Auswahl von Einlegern hergestellt werden. Es besteht weiterhin die Möglichkeit, durch unterschiedliche Materialverwendungen, Einleger nebeneinander zu platzieren und die jeweils durch das Material der Einleger gegebenen technischen Vorteile in einer Fügestelle zu nutzen.

In einer besonders bevorzugten Ausführungsform der Erfindung wird durch geeignete Verwendung von Konzentratoren und/oder Einlegern bewerkstelligt, dass die Fügestelle nach dem Aushärten jeweils eine obere und untere Grenzfläche mit einem dazwischenliegenden Übergangsbereich ausbildet, wobei eine Vielzahl von Verstärkungsfasern oder Elementen des Einlegers aus dem Übergangsbereich durch jeweils wenigstens eine der Grenzflächen in die jeweils benachbarten Materialbereiche der Fügepartner hinein ragen und somit einen Beitrag zur Festigkeit der Verbindung leisten. Durch eine solche, mittels eines faserverstärkten Konzentrators oder Einlegers hergestellte Ultraschallschweißverbindung, wird eine Fügestelle erhalten, die eine deutlich höhere Festigkeit aufweist im Vergleich zu einer nach dem Stand der Technik hergestellte Fügestelle vergleichbarer Größe.

In einer bevorzugten Ausführungsform der Erfindung wird der Konzentrator als ein Granulatmaterial bereitgestellt. In einem solchen Fall erfolgt das Aufschmelzen des Granulats zwischen den Fügepartnern gemeinsam mit dem Aufschmelzen der Fügeflächen.

Als Einleger eignen sich unterschiedliche Materialien. So kann als Einbettungsmaterial z.B. ein CFRTP zum Einsatz kommen oder alternativ ein metallischer Einleger wie z.B. ein Feinstanzbauteil. Als CFRTP kann z.B. ein kohlefaserverstärkter thermoplastischer Einleger verwendet werden, der unmittelbar zwischen die Berührflächen der Fügepartner eingebettet wird und zusammen durch die mechanischen Schwingungen mit den Fügepartnern aufgeschmolzen und nach dem Aushärten Teil der Schweißverbindung wird.

Ein weiterer Aspekt der vorliegenden Erfindung ist darin zu sehen, dass als Konzentrator-Material oder Einlegermaterial jeweils solche Kunststoffmaterialien verwendet werden können, dass die besonderen technischen Eigenschaften dieser Materialien zu Einsatz kommen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine schematische Ansicht einer Ultraschallschweißvorrichtung, bei der ein Konzentrator in Form eines faser- oder partikelverstärkten thermoplastischen Granulats verwendet wird,
- Fig. 2: eine zur Figur 1 ähnliche schematische Ansicht einer Ultraschallschweißvorrichtung, bei der anstelle des Konzentrators in die Fügestelle ein formstabiler Einleger mit höherer Schmelztemperatur als die der Fügepartner eingebettet wird, und
- Fig. 3: eine schematische Schnittansicht durch eine mit dem erfindungsgemäßen Verfahren hergestellte Fügestelle zweier Fügepartner.

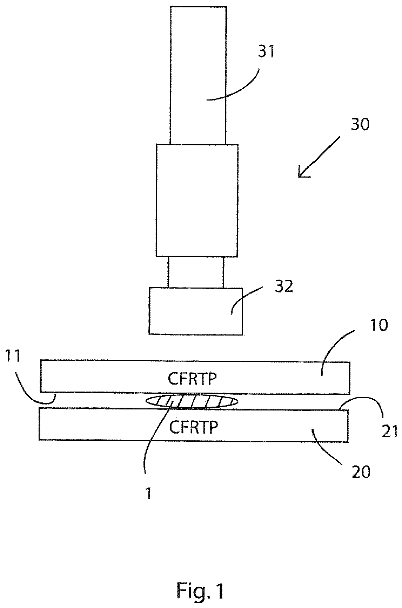

Das erfindungsgemäße Verfahren wird im Folgenden anhand der Bezugnahme auf die Fig. 1 bis 3 erläutert, wobei gleiche Bezugszeichen auf gleiche funktionelle und strukturelle Elemente hinweisen.

Das erfindungsgemäße Verfahren wird mittels eines Ultraschallschweißverfahrens mit einer Ultraschallvorrichtung 30 durchgeführt. Die Ultraschallschweißvorrichtung 30 umfasst einen herkömmlichen Ultraschallwandler 31 und eine Sonotrode 32, die mittels einer Kraft F auf die Fügepartner gedrückt werden kann. Mittels der Ultraschallschweißvorrichtung 30 können Ultraschallschwingungen an den Grenzflächen der beiden Fügepartner 10, 20 erzielt werden. Beim Erzeugen von Ultraschallschwingungen werden die Verbindungsflächen 11, 21 der Fügepartner 10, 20 kontinuierlich angeschmolzen. Vor dem Annähern der planaren Fügeflächen bis zum vollständigen Ankoppeln der beiden Fügepartner 10, 20 wurde ein Konzentrator 1 zwischen die Fügepartner 10, 20 und zwar zwischen ihre Verbindungsflächen 11, 21 wie in Fig. 1 gezeigt, eingebracht.

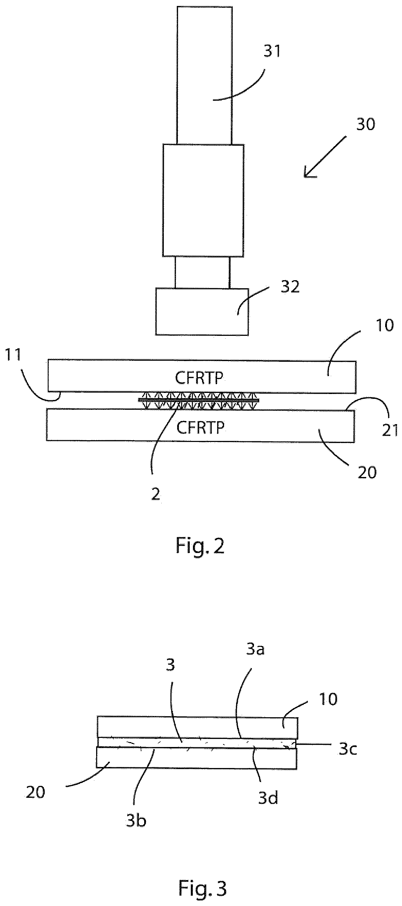

Alternativ dazu wird in dem in Fig. 2 dargestellten Verfahren ein kohlefaserverstärkter thermoplastischer Einleger 2 in die Fügestelle eingebettet. Dieser Einleger 2 hat eine solche Schmelztemperatur oberhalb der Schmelztemperatur der Fügepartner, dass der Einleger beim Aufschmelzen der Fügepartner mittels Ultraschall formstabil bleibt und so formschlüssig in die Fügestelle eingebettet wird.

Erfindungsgemäß ist weiter vorgesehen, dass sich infolge eines stationären Abschmelzverhaltens eine konstante bzw. bestimmungsgemäße Schmelzschichtdicke ausbildet, die durch die Amplituden der Sonotrode oder auch durch die Kraftprofilierung beeinflusst werden kann. Nach Ausbilden einer ausreichend dicken Schmelzschichtdicke wird die Ultraschallbeaufschlagung gestoppt und die Schweißzone erstarrt, so dass sich eine formschlüssige Fügestelle 3 ausbildet die jeweils eine obere und untere Grenzfläche 3a, 3b aufweisen und der aufgeschmolzene Bereich, bestimmt durch die aufgeschmolzene Schmelzschichtdicke dazwischen, ein Übergangsbereich 3c ausbildet, wie dies in Fig. 3 schematisch gezeigt ist. In dem Übergangsbereich 3c befinden sich eine Vielzahl von Verstärkungsfasern 3d des verwendeten Konzentrators, die jeweils durch die benachbarte Grenzfläche 3a, 3b in die jeweils benachbarten Materialbereiche der endlosfaserverstärkten thermoplastischen Kunststofffügepartner 10, 20 hinein ragen und so einen Beitrag zur Festigkeit der Verbindung leisten.

Das vorliegende Ausführungsbeispiel kann mit einem thermoplastischen Polyamid, welches endlosfaserverstärkt ausgebildet ist, durchgeführt werden. Als Konzentrator 1 kann bspw. ein faserverstärkter Polyamid PA 66 in Form eines Granulats eingesetzt werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Verfahren zum Fügen von faserverstärkten, aus einem Kunststoffmaterial gebildeten Fügepartner (10, 20) an ihren Verbindungsflächen (11, 21), wobei ein Konzentrator (1) im Bereich der Verbindungsflächen (11, 21) zwischen diese aufgebracht und gemeinsam mit den Verbindungsflächen (11, 21) mittels eines Ultraschallschweißverfahren aufgeschmolzen wird, derart, dass eine materialschlüssige Fügestelle (3) als ein Mischbereich aus den Materialen der Fügepartner und des Konzentrators nach dem Aushärten ausbildet wird, wobei der Konzentrator (1) ein faserverstärktes oder partikelverstärktes Kunststoffmaterial aufweist.

2. Verfahren zum Fügen von faserverstärkten, aus einem Kunststoffmaterial gebildeten Fügepartner (10, 20) an ihren Verbindungsflächen (11, 21), wobei ein Einleger (2) im Bereich der Verbindungsflächen (11, 21) zwischen diese aufgebracht wird und die Verbindungsflächen (11, 21) mittels eines Ultraschallschweißverfahren aufgeschmolzen werden, derart, dass der Einleger (2) formschlüssig in die Verbindungsflächen eingebettet und so eine formschlüssige Fügestelle (3) sowie zwischen dem Einleger materialschlüssige Fügestelle erhalten wird, wobei der Einleger (2) ein faserverstärktes oder partikelverstärktes Kunststoffmaterial aufweist.

3. Verfahren nach Anspruch 1 oder 2, **dadurch gekennzeichnet, dass** die Fügepartner (10, 20) aus einem thermoplastischen Kunststoff bestehen in die eine Vielzahl von Endlosfasern eingebettet sind.

4. Verfahren nach einem der Ansprüche 1 oder 2, **dadurch gekennzeichnet, dass** als Verstärkungsfaser- oder Partikel Karbonfasern, Kohlenstofffasern oder Glasfasern bzw. Partikel daraus verwendet werden.

5. Verfahren nach einem der vorhergehenden Ansprüche, **dadurch gekennzeichnet, dass** mehrere Einleger (2) unterschiedlicher Form und/oder Materialzusammensetzung in die Fügestelle (3) eingebettet werden.

6. Verfahren nach einem der vorhergehenden Ansprüche, **dadurch gekennzeichnet, dass** die Fügestelle (3) nach dem Aushärten jeweils eine obere und untere Grenzfläche (3a, 3b) mit einem Übergangsbereich (3c) umfasst, wobei eine Vielzahl von Verstärkungsfasern aus dem Übergangsbereich (3c) durch jeweils wenigstens eine Grenzfläche (3a, 3b) in die jeweils benachbarten Materialbereiche der Fügepartner (10, 20) hineinragen und einen Beitrag zur Festigkeit der Verbindung leisten.

7. Verfahren nach einem der vorhergehenden Ansprüche 1, 3, 4 oder 6, **dadurch gekennzeichnet, dass** als Konzentrator ein Kunststoffgranulat verwendet wird.

8. Verfahren nach einem der vorhergehenden Ansprüche 2 bis 5 oder 7, **dadurch gekennzeichnet, dass** die Schmelztemperatur des oder der Einleger (2) oberhalb der Schmelztemperatur der Fügepartner (10, 20) liegt.

## Claims

1. Method for joining fiber-reinforced joining partners (10, 20), formed from a plastics material, at the connection faces (11, 21) thereof, wherein in the region of the connection faces (11, 21) a concentrator (1) is applied therebetween and by means of an ultrasonic welding method is fused collectively with the connection faces (11, 21) in such a manner that post curing a materially integral joint (3) as a mixing region is configured from the materials of the joining partners and of the concentrator, wherein the concentrator (1) comprises a fiber-reinforced or particle-reinforced plastics material.

2. Method for joining fiber-reinforced joining partners (10, 20), formed from a plastics material, at the connection faces (11, 21) thereof, wherein in the region of the connection faces (11, 21) an insert (2) is applied therebetween and by means of an ultrasonic welding method the connection faces (11, 21) are fused in such a manner that the insert (2) is embedded in a materially-integral manner into the connection faces and in this way a form-fitting joint (3) and between the insert a materially-integral joint is obtained, wherein the insert (2) comprises a fiber-reinforced or particle-reinforced plastics material.

3. Method according to Claim 1 or 2, **characterized in that** the joining partners (10, 20) are composed of a thermoplastic plastics material into which a multiplicity of endless fibers are embedded.

4. Method according to one of Claims 1 or 2, **characterized in that** carbon fibers, or glass fibers or particles therefrom, respectively, are used as reinforcement fibers or particles.

5. Method according to one of the preceding claims, **characterized in that** a plurality of inserts (2) of various shapes and/or material compositions are embedded into the joint (3).

6. Method according to one of the preceding claims, **characterized in that** the joint (3) post curing comprises in each case one upper and lower boundary surface (3a, 3b) having a transition region (3c), wherein a multiplicity of reinforcement fibers protrude from the transition region (3c) through in each case at least one boundary surface (3a, 3b) into the respectively adjacent material regions of the joining partners (10, 20) and contribute toward the strength of the connection.

7. Method according to one of the preceding Claims 1, 3, 4 or 6, **characterized in that** a plastics granulate is used as a concentrator.

8. Method according to one of the preceding Claims 2 to 5 or 7, **characterized in that** the melting temperature of the insert (2) or inserts (2) is above the melting temperature of the joining partners (10, 20).

## Revendications

1. Procédé d'assemblage de partenaires d'assemblage (10, 20) formés par une matière plastique, renforcés par des fibres, au niveau de leurs surfaces de liaison (11, 21), un concentrateur (1) étant disposé entre ceux-ci dans la zone des surfaces de liaison (11, 21) et fondu conjointement avec les surfaces de liaison (11, 21) au moyen d'un procédé de soudage par ultrasons, de telle sorte qu'un emplacement d'assemblage par accouplement de matière (3) soit formé après le durcissement sous la forme d'une zone mixte constituée par les matières des partenaires d'assemblage et du concentrateur, le concentrateur (1) comprenant une matière plastique renforcée par des fibres ou renforcée par des particules.

2. Procédé d'assemblage de partenaires d'assemblage (10, 20) formés par une matière plastique, renforcés par des fibres, au niveau de leurs surfaces de liaison (11, 21), un insert (2) étant disposé entre ceux-ci dans la zone des surfaces de liaison (11, 21) et les surfaces de liaison (11, 21) étant fondues au moyen d'un procédé de soudage par ultrasons, de telle sorte que l'insert (2) soit incorporé par accouplement de forme dans les surfaces de liaison et de cette manière un emplacement d'assemblage par accouplement de forme (3), ainsi qu'un emplacement d'assemblage par accouplement de matière entre l'insert, soit obtenu, l'insert (2) comprenant une matière plastique renforcée par des fibres ou renforcée par des particules.

3. Procédé selon la revendication 1 ou 2, **caractérisé en ce que** les partenaires de liaison (10, 20) sont constitués par une matière plastique thermoplastique, dans laquelle une pluralité de filaments sont incorporés.

4. Procédé selon l'une quelconque des revendications 1 ou 2, **caractérisé en ce que** des fibres de carbone, ou des fibres de verre ou des particules de celles-ci sont utilisées en tant que fibres ou particules de renforcement.

5. Procédé selon l'une quelconque des revendications précédentes, **caractérisé en ce que** plusieurs inserts (2) de forme différente et/ou de composition de matière différente sont incorporés dans l'emplacement d'assemblage (3).

6. Procédé selon l'une quelconque des revendications précédentes, **caractérisé en ce que** l'emplacement d'assemblage (3) comprend après le durcissement respectivement une interface supérieure et inférieure (3a, 3b) avec une zone de transition (3c), une pluralité de fibres de renforcement dépassant de la zone de transition (3c) au travers de respectivement au moins une interface (3a, 3b) dans les zones de matière voisines respectives du partenaire d'assemblage (10, 20) et contribuant à la solidité de la liaison.

7. Procédé selon l'une quelconque des revendications 1, 3, 4 ou 6 précédentes, **caractérisé en ce qu'**un granulat de matière plastique est utilisé en tant que concentrateur.

8. Procédé selon l'une quelconque des revendications 2 à 5 ou 7 précédentes, **caractérisé en ce que** la température de fusion du ou des inserts (2) est supérieure à la température de fusion des partenaires de liaison (10, 20).
